(19) Europäisches Patentamt
European Patent Office
Office européen des brevets

(11) **EP 1 972 649 B1**

(12) **EUROPEAN PATENT SPECIFICATION**

(45) Date of publication and mention
of the grant of the patent:
**15.12.2010 Bulletin 2010/50**

(21) Application number: **07714151.3**

(22) Date of filing: **14.02.2007**

(51) Int Cl.:
*C08G 63/66* (2006.01)        *C08G 63/88* (2006.01)
*C08J 5/18* (2006.01)         *C08K 3/32* (2006.01)
*C08K 5/521* (2006.01)        *C08L 67/04* (2006.01)
*C08L 101/16* (2006.01)

(86) International application number:
**PCT/JP2007/052598**

(87) International publication number:
**WO 2007/094352 (23.08.2007 Gazette 2007/34)**

(54) **POLYETHER-POLYLACTIC ACID COMPOSITION AND POLYLACTIC ACID FILM CONTAINING SAME**

ZUSAMMENSETZUNG AUS POLYETHER UND POLYMILCHSÄURE UND POLYMILCHSÄUREFILM DAMIT

COMPOSITION DE POLYETHER-ACIDE POLYLACTIQUE ET FILM D'ACIDE POLYLACTIQUE LA CONTENANT

(84) Designated Contracting States:
**DE FR GB IT**

(30) Priority: **16.02.2006   JP 2006038926**

(43) Date of publication of application:
**24.09.2008   Bulletin 2008/39**

(73) Proprietor: **TORAY INDUSTRIES, INC.**
**Tokyo 103-8666 (JP)**

(72) Inventors:
• **NAKAMURA, Hirokado**
**Otsu-shi, Shiga, 520-0842 (JP)**
• **MATSUMOTO, Taisei**
**Shiga, 520-2101 (JP)**
• **KIMURA, Masahiro**
**Kyoto, 606-8305 (JP)**

(74) Representative: **Prüfer & Partner GbR**
**European Patent Attorneys**
**Sohnckestraße 12**
**81479 München (DE)**

(56) References cited:
JP-A- 08 301 993        JP-A- 09 151 243
JP-A- 10 036 651        JP-A- 62 025 121
JP-A- 2005 146 274

**Description**

Technical Field

The present invention relates to a polyether-polylactic acid composition comprising a polyether and a polylactic acid components which is excellent in storage stability, melt stability, less in odor, good in hue and a polylactic acid film containing same.

Background Art

In recent years, in view of plastic waste disposal problems and environmental problems, etc., researches and developments for widely using, as a multipurpose polymer, polylactic acid which is a plant material having excellent biodegradability have actively been done, and many investigations and patent applications addressing its compositions have been made. However, since polylactic acid has a relatively low glass transition temperature as 60°C, and is a hard and brittle polymer, there are problems to be overcome for each application to use homopolymer as it is for various applications as a multipurpose polymer.

For example, in case where it is used as a film or sheet application, it is a big problem to be hard and brittle, and various researches and developments has still now been continued to solve the problem. In particular, softening by adding plasticizers or improving brittleness by adding aliphatic polyesters or the like have been widely known, and by combining these techniques, it has become possible to widely use the polylactic acid.

Among them, a method in which a polylactic acid composition is used as an additive is a useful method in a view point that its compatibility with the polylactic acid, which is the base, is good or in a view point that a function can be imparted by an interaction with the polylactic acid.

However, these improving methods, too, cannot be said to be a satisfactory method in view points of storage stability, melt stability or generation of odor or the like of the polylactic acid composition to be used as the additive, i.e., there are problems that physical properties of the polylactic acid composition to be added may greatly deteriorate during storage or its molecular weight may lower significantly when melted at a mold processing or it may generate a peculiar odor or the like.

As main reason for decreasing storage stability or melt stability, it is mentioned that lactide left in the polylactic acid to be the base or in the polylactic acid composition and lactide generated by heat at mold processing are hydrolyzed by moisture or the like in the air, to become an organic acid and functions to cut the polymer chain. And, in general, lactide has a sublimability and since it may cause a stain of apparatus, and has a peculiar odor which is unpleasant, decrease of lactide content left in the composition and decrease of the organic acid content generated by hydrolysis are problems to be solved.

As methods for removal of the residual lactide in the polylactic acid composition, method of extraction by a solvent, method of dissolving the polymer by a good solvent and precipitating it in a poor solvent are known in laboratory level. In production of industrial scale, a method of removal by vacuum in extruding step by a twin-screw extruder (Patent reference 1) and a method of removal by evaporating low molecular weight compounds from a strand obtained by an extruding step or the like in a pot of which pressure is reduced (Patent reference 2) are disclosed.

However, in these methods, even if the residual lactide in the composition is removed by heating under reduced pressure, lactide regenerates and it is impossible to easily decrease the lactide content in the resin. This is because catalyst used for polymerization functions to depolymerize to generate lactide from the polymer chain. Furthermore, since a study of organic acid content has not been done, even if the residual lactide in the composition is simply removed, it is difficult to easily overcome the problems to be solved by the present invention.

Furthermore, a method for removal of the catalyst from polylactic acid produced from lactic acid under coexistence of a solvent (Patent reference 3) is also known. In this method, the catalyst component is removed by adding a hydrophilic organic solvent and a weak acid into the polylactic acid dissolved in the solvent. Furthermore, there is a method for deactivation and removal of the catalyst and removal of the residual lactide by washing with water, but in this method, the residual lactide hydrolyzes to generate corresponding amount of organic acid in the composition, and storage stability lowers.

A production method in which the residual lactide is reduced by degassing under reduced pressure and a chelating agent or an acidic phosphoric acid ester is used as a catalyst deactivator (Patent reference 4 and Patent reference 5) is also known. However, in such method, it is difficult to control the organic acid content, and furthermore, a study on effect depending on the organic acid content or to control it together with the lactide content has not been done sufficiently. Furthermore, as to the compositions of Patent references 4 and 5, since the component ratio other than polylactic acid is high, there is a problem that the biobased content of the molded article formed from this composition is not so high.

Furthermore, a technology in which the organic acid content in polyether-polylactic acid composition is discussed is disclosed in Patent reference 6. In the method described in this reference, it is described that the organic acid content is measured as acid value, and by controlling it in a specified range or less, stability with the lapse of time can be achieved. Although the polyether-polylactic acid composition described in Patent reference 6 has fairly good characteristics, it is the present situation that a higher storage stability and melt stability are desired.

Patent reference 1: EU Patent No. 532154
Patent reference 2: JP-H05-93050A
Patent reference 3: JP-H06-116381A
Patent reference 4: JP Patent No. 3513972
Patent reference 5: JP Patent No. 3487388
Patent reference 6: JP2005-146274A

Disclosure of the Invention

Problems to be solved by the Invention

The present invention, in view of such background arts, provides a polyether-polylactic acid composition which is excellent in storage stability and melt stability, less in odor, good in hue and a polylactic acid-based film containing same.

Means for Solving the Problems

In order to solve the above-mentioned problems, the polyether-polylactic acid composition of the present invention employs the following means. That is, the polyether-polylactic acid composition of the present invention is a compound containing a polyether and polylactic acid segments and is characterized in that residual lactide content is 0.3 wt% or less and an acid value is 50 equivalent/t or less, wherein the polyether-polylactic acid composition contains phosphoric acid or phosphorous acid or a mixture thereof as a catalyst activity reducing agent.
Furthermore, the polylactic acid-based film of the present invention is characterized by being a polylactic acid-based film comprising polyether-polylactic acid composition which is a compound having a polyether and polylactic acid segments, of which residual lactide content is 0.3 wt% or less and acid value is 50 equivalent/t or less, wherein the polylactic acid-based film contains phosphoric acid or phosphorous acid or a mixture thereof as a catalyst activity reducing agent.

Effect of the Invention

According to the present invention, it is possible to provide a polyether-polylactic acid composition which is excellent in storage stability and melt stability, less in odor and good in hue which cannot be achieved by conventional arts. And, it is possible to provide a polylactic acid-based film having an excellent softness by adding the polyether-polylactic acid composition of the present invention to the polylactic acid-based polymer. That is, the polyether-polylactic acid composition of the present invention, as an additive which is soft and has a degradability, is excellent in storage stability and melt stability and good in hue, can be provided to applications such as wrapping applications including sheet and film, injection molded articles, laminations or the like, and especially useful as an additive for wrapping material. The polylactic acid-based film of the present invention in which the polyether-polylactic acid composition of the present invention is added to the polylactic acid-based polymer is a film excellent in softness, bleed out resistance and high in biobased content.

Best Embodiment for Carrying Out the Invention

The inventor of the present invention, aggressively studied the above-mentioned problems, i.e., polyether-polylactic acid composition excellent in storage stability and melt stability and good in hue, and by paying attention to the residual lactide content and the acid value in a compound having polyether and polylactic acid segments, found those having specified values of these solve the above-mentioned problems at a time. Here, "good in hue" means that the composition maintains white color without turning to brown by thermal history or the like.
That is, the polyether-polylactic acid composition of the present invention is characterized by being excellent in storage stability and melt stability, hard to turn yellow, and good in hue which cannot be achieved by conventional arts. The polyether-polylactic acid composition of the present invention is a compound comprising polyether having one or more OH group and a polylactic acid segment of molecular weight 144 or more, especially, it means a periodical copolymer, block copolymer or graft copolymer of a polyether monomer and polylactic acid monomer.
Regarding synthesis of the polyether-polylactic acid composition, a method in which, after synthesizing a polyether, lactide is subjected to ring-opening polymerization by using a catalyst, a method in which, after synthesizing a polyether, lactic acid is subjected to a direct polymerization, or a method in which, after synthesizing a polylactic acid oligomer by ring-opening of lactide by a catalyst or by direct polymerization of lactic acid, an oligomer of polyether is added and the mixture is polymerized, or the like, are mentioned, but it is industrially preferable to employ the method in which, after synthesizing a polyether, lactide is subjected to ring-opening polymerization by using a catalyst.

However, in general, it is known that, in the ring-opening polymerization reaction of lactide, an equilibrium arises between the ring-opening polymerization of lactide and depolymerization of the polymer around the end of the polymerization. And due to this equilibrium reaction, it is not possible that all lactide which is monomer turn to a polymer, and unreacted lactide is left in the composition. The lactide left in the composition (hereafter, referred to as residual lactide) has moisture absorbability and turns to an organic acid through hydrolysis by water component in the air, etc. Since the organic acid accelerates decomposition of polylactic acid, it is one factor which significantly deteriorates storage stability of the polyether-polylactic acid composition.

Whereas, even when the residual lactide content is high, it is possible to prevent hydrolysis of polylactic acid if the composition is stored in a sealed container of which water content is removed, but since lactide has sublimability, it crystallize on surface of the composition, moisture adsorption and hydrolysis arise when it is taken out from the sealed container and becomes sticky, handling property becomes significantly poor, an odor is generated, etc., which cause lowering quality.

From the above-mentioned, it is found that in order to obtain an polyether-polylactic acid composition which is excellent in storage stability and melt stability and good in handling, it is necessary that the residual lactide content is low and the organic acid content is low. At this time, the residual lactide content can be determined by GC (gas chromatograph), and the organic acid content can be determined by measuring acid value by neutralization titration.

As concrete values, it is necessary that the residual lactide content is, with respect to the polyether-polylactic acid composition of the present invention 100 wt%, the residual lactide content is 0.0 wt% or more and 0.3 wt% or less and the acid value is 0 equivalent/t or more and 50 equivalent/t or less.

Furthermore, in case where the polyether-polylactic acid composition of the present invention is added to the polylactic acid-based polymer to be molded into a sheet or film, in view point that an odor or a volatile substance hardly generates, it is preferable that the residual lactide content is 0.0 wt% or more and 0.2 wt% or less, and in case where molded articles contacts with foods such as overwrap film, or in case where a thin film of around 10 $\mu$m is molded, in addition to the odor or volatile substance, in view point that an extract hardly generates, it is preferable to be 0.0 wt% or more and 0.1 wt% or less. In case where these range are exceeded, melt stability or storage stability deteriorates significantly, handling may lower or an odor may generate.

As methods for making the residual lactide content 0.0 wt% or more and 0.3 wt% or less with respect to the polyether-polylactic acid composition of the present invention 100 wt%, a method of deactivating the catalyst by adding a catalyst activity reducing agent at around the end of the polymerization reaction of the polyether-polylactic acid composition, or a method of removing residual lactide by a pressure-reduced evaporation from the polymerization reaction system after removing catalyst, are mentioned.

Here, the polylactic acid-based polymer of the present invention means those of which main component is L-lactic acid and/or D-lactic acid and lactic acid-based component in the polymer is 70 wt% or more, and homo polylactic acid which substantially consists of L-lactic acid and/or D-lactic acid is preferably used.

As methods for removing catalyst from the polymerization reaction system, there are methods of precipitating by a poor solvent and a good solvent or a method of washing out with water, but since they are not industrial and contact chances with water are too many, it is difficult to obtain a composition of good quality. For that reason, the method of deactivating catalyst at around the end of polymerization reaction of the polyether-polylactic acid composition is preferable. A more concrete method for deactivating the catalyst is mentioned later.

Furthermore, it is preferable that the acid value is 0 equivalent/t or more and 40 equivalent/t or less since a better storage stability can be retained. When the acid value exceeds 50 equivalent/t, storage stability may lower.

Furthermore, as a method for making the acid value of the polyether-polylactic acid composition of the present invention 0 equivalent/t or more and 50 equivalent/t or less, a method for reducing respective water contents of the polyether and lactide to be the raw materials of the polyether-polylactic acid composition of the present invention, or the like, are mentioned. The water content can be decreased by heating to respectively appropriate temperatures and by vacuum drying.

Concretely, by making the water contents in the polyether which is, before polymerization, raw material of the polyether-polylactic acid composition of the present invention 1,000 ppm or less, and making the water content of the lactide 800 ppm or less, it is possible to make the acid value of the polyether-polylactic acid composition of the present invention in which those raw materials are used 50 equivalent/t or less. More preferably, it is preferable that the water content in the polyether is 800 ppm or less and the water content in the lactide is 600 ppm or less.

As the polyether segment used for the polyether-polylactic acid composition of the present invention, in view points of availability, degradability and safety, it is preferable to use a polyalkylene ether with 2 or more carbons between ether bonds. Concretely, polyethylene glycol, polypropylene glycol, polybutylene glycol, polypentane diol, polytetramethylene glycol, polyethylene oxide, polypropylene oxide, polybutylene oxide or the like are preferably used. Among them, in view of compatibility with polylactic acid, polyethylene glycol is most preferably used.

The molecular weight of polyether segment used for the polyether-polylactic acid composition of the present invention is not especially limited, but in order to sufficiently exhibit its function such as softening when the polyether-polylactic acid composition is used as a plasticizer of the polylactic acid-based polymer, it is preferable to be 3,000 or more and 50,000 or less in number average molecular weight, and more preferably, it is 6,000 or more and 20,000 or less.

Furthermore, the polylactic acid segment used for the polyether-polylactic acid composition of the present invention is, in view points of improving thermal stability and prevention of bleed out (migration), preferably polylactic acid segment having crystallinity and optical purity of 90% or more, and it is preferable to have one or more, per molecule, polylactic acid segment of which number average molecular weight is 1,500 or more. More preferably, it is preferable to have one or more, per molecule, polylactic acid segment of which optical purity is 95% or more and number average molecular weight is 2,000 or more. What polylactic acid segment has a crystallinity means that, in case where a DSC (differential scanning calorimeter) measurement is carried out at an appropriate temperature range after sufficiently thermally crystallizing the polyether-polylactic acid composition, a heat of crystal fusion based on polylactic acid component is observed. In case where the polylactic acid segment has not a number average molecular weight of 1500 or more, the polylactic acid segment has not crystallinity and product characteristics may not normally be exhibited such that the heat resistance of the polyether-polylactic acid composition may decrease, and when a film is produced by adding the polyether-polylactic acid composition of the present invention to the polylactic acid-based polymer, said polyether-polylactic acid composition may bleed out (migration) by heat.

The above-mentioned polylactic acid segment can be obtained by using L-lactide and/or D-lactide to copolymerize it with a polyether component of an appropriate amount to be fed.

It is preferable that the residual lactide content of the polyether-polylactic acid composition of the present invention is, in order to exhibit an excellent melt stability, 0.0 wt% or more and 0.3 wt% or less when kept in molten state under nitrogen atmosphere. If the residual lactide content when kept in molten state under nitrogen atmosphere exceeds 0.3 wt%, a molecular weight decrease or odor may arise when melted.

It is preferable that a decrease of number average molecular weight of the polyether-polylactic acid composition of the present invention is, in order to keep a good hue, 0% or more and 10% or less when kept in molten state under an inert gas atmosphere. Concretely, it means the decrease of number average molecular weight under an inert gas atmosphere for one hour is 10% or less.

The inert gas mentioned here is a gas which does not chemically react with the reactant and rare gases such as neon, argon, krypton, xenon, radon, or nitrogen, carbon dioxide or the like are mentioned. Among them, in view points of low price, easy availability, excellent handling, etc., argon, nitrogen and carbon dioxide are preferably used.

In order to obtain the polyether-polylactic acid composition of the present invention, it is most preferably employed that L-lactide and/or D-lactide is copolymerized by using a catalyst with a polyethylene glycol of a number average molecular weight 6,000 or more and 20,000 or less in an amount such that it becomes to a polylactic acid segment of number average molecular weight 1,500 or more, subsequently activity of the catalyst is reduced and then, by evaporation under a reduced pressure, residual lactide is removed.

Polymerization reaction of lactide is an equilibrium reaction between ring-opening polymerization and depolymerization. Accordingly, when the residual lactide is removed from the polymerization reaction system by evaporating under reduced pressure without reducing activity of the catalyst of lactide polymerization reaction, the polymerization reaction equilibrium shifted to depolymerization side and depolymerization of the polymer is accelerated. For that reason, as a result of evaporation under reduced pressure, lactide content increases. That is, since the reason of decreasing the activation energy of depolymerization is the catalyst, in order to remove the residual lactide by evaporation under reduced pressure, it is important that the catalyst activity has sufficiently been reduced. In order to obtain the polyether-polylactic acid composition of the present invention, as mentioned above, by reducing the catalyst activity after the polymerization reaction and carrying out evaporation under reduced pressure, the activation energy of depolymerization of polymer increases and it becomes possible to control depolymerization. For that reason, it is possible to decrease the residual lactide by evaporation under a reduced pressure.

In the present invention, catalyst used for the polymerization reaction of lactide is not especially limited but, tin octoate, tin chloride, zinc chloride, zinc acetate, lead oxide, lead carbonate, titanium chloride, diacetoacetoxy titanium, tetraethoxy titanium, tetrapropoxy titanium, tetrabutoxy titanium, germanium oxide, zirconium oxide, iron acetyl acetate, etc., are used. Among them, in view points of reaction rate or yield, tin octoate or iron acetyl acetate is preferably used, and further preferably tin octoate is used. It is preferable that an amount of these catalysts to be added is 0.001 to 2 wt% with respect to the polyether-polylactic acid composition 100 wt%. It is further preferable that the amount to be added is 0.01 to 0.05 wt%, in view points of reaction rate, prevention of coloration, etc.

As method for reducing activity of the above-mentioned catalyst, a catalyst activity reducing agent is used. The catalyst activity reducing agent which is used depends on the lactide polymerization catalyst, and among them, in view points of preventing polymer chain being cut, good hue of the obtainable composition and efficient bonding to the catalyst, phosphoric acid or phosphorous acid, or a mixture thereof is used.

These catalyst activity reducing agents can reduce the catalyst activity by coordinating unpaired electron in the catalyst activity reducing agent to a metal atom of the lactide polymerization catalyst. That is, by coordinating the unpaired electron in the catalyst activity reducing agent to a metal atom of the catalyst, it is possible to enhance the activation energy of polymerization and depolymerization.

Furthermore, by carrying out ICP (emission spectroscopy) measurement, it is possible to observe ratio of the metal atom in catalyst in the polyether-polylactic acid composition and the catalyst activity reducing agent. Furthermore, it is preferable that, in the relation between the amount of the catalyst and the amount of the catalyst activity reducing agent, the relation of $1/6 < M/P < 1/2$ (where M in the equation denotes a molar content of the catalyst metal element present in the polyether-polylactic acid composition and P denotes a molar content of phosphorus atom present in the polyether-polylactic acid composition.) is satisfied. In case where the M/P exceeds 1/2, since the activity of the catalyst is not sufficiently reduced and the activation energy of the depolymerization reaction cannot sufficiently be reduced, even when an evaporation under reduced pressure is carried out after adding the catalyst activity reducing agent, the residual lactide may not be reduced. In case where the M/P is less than 1/6, the amount of the catalyst activity reducing agent becomes excessive and the decomposition of finally obtainable polyether-polylactic acid composition may be accelerated, or due to blocking by stickiness, handling property may deteriorate.

Further preferable case is $1/5 < M/P < 1/2$, and most preferably, $M/P = 1/3$.

The polyether-polylactic acid composition of the present invention can preferably be used as an additive to the polylactic acid-based polymer. Polylactic acid-based polymer is generally transparent, but it is known for lacking softness. However, by adding the polyether-polylactic acid composition of the present invention into the polylactic acid-based polymer, it is possible to obtain a polylactic acid-based film excellent in storage stability, melt stability, having transparency and softness, high in heat resistance, of which bleed out is sufficiently prevented.

Next, the polymerization reaction is explained. For the polymerization reaction of the present invention, a sealable container may be used as far as a stirring is possible, temperature control is possible and excellent in air tightness, and it is preferable that the reaction is carried out in a reaction container equipped with a stirrer.

In the above-mentioned container, the polyether and lactide are melted and mixed and a polymerization catalyst is added. It is desirable in view of reaction equilibrium that a reaction temperature is the melting point of lactide or more, and 180˚C or less. The melting temperature of lactide is around 100˚C, and it is desirable to be a temperature of 100˚C or more and 185˚C or less, further preferably, 160 to 180˚C, in view of reaction equilibrium.

In order to prevent a coloration by thermal decomposition of the polyether, it is preferable that the atmosphere inside the reaction system when melted is sufficiently filled with a dried inert gas. Among them, after reducing pressure of the reaction system, replacing the reaction system with nitrogen, argon gas or carbon dioxide gas which has been passed through a dried silica gel tube is repeated three times or more is preferable. It is preferable that the reaction is carried out after removing water contained in the polyether, the lactide, the catalyst and the catalyst activity reducing agent.

Whereas, it is preferable that the catalyst activity reducing agent is added after finalizing the polymerization step. If it is added during the polymerization step, the catalyst activity is reduced and the reaction does not progress, and a large amount of lactide or low molecular weight compounds may remain. As to concrete timing of addition, a time point when the conversion ratio of monomer such as lactide to a polymer is 85% to 99% is preferable, and when an efficient evaporation step is considered, a ratio of 94% to 99% is further preferable.

As adding methods of such a catalyst activity reducing agent, a method of adding while being wrapped with wafer paper made of polylactic acid, adding method of the catalyst activity reducing agent directly into the reaction system by using an adding device equipped to the reaction container, etc., are mentioned. In view points of handling or prevention of introducing water into the reaction system, a dropping by using an adding device is preferable.

By a function of such catalyst activity reducing agent, even under a circumference in which activation energy is reduced by presence of the catalyst, depolymerization reaction can be prevented, and as a result, it is possible to minimize the polymer chain being cut. The reaction between the catalyst and the catalyst activity reducing agent depends largely on degree of stirring, but it is relatively quick, i.e., 3 minutes or so is sufficient, and it is preferably 5 to 20 minutes. It is preferable that a reaction temperature at that time is melting point of the polyether-polylactic acid composition or more and 180˚C or less.

Furthermore, for the purpose of removing the lactide and the low molecular weight compounds remained after adding the catalyst activity reducing agent, it is desirable to carry out an evaporation under reduced pressure. By this evaporation step, it is possible to decrease the residual lactide content, and it is possible to improve the odor, storage stability, stability with lapse of time of the polyether-polylactic acid composition.

As a concrete evaporation method, the method in which, after adding the catalyst activity reducing agent and the catalyst is sufficiently reacted with the catalyst activity reducing agent, stirring and reducing pressure are continued as they are without taking the reactant out of the reaction system, is preferable. As a preferable evaporation condition, it is preferable to carry out in an evaporation time of 3 hours or more, at a temperature of the melting point of the polyether-polylactic acid composition or more and 150°C or less, and at a reduced pressure of 13 to 1333 Pa. As other evaporation method, there is a method in which, after finalizing the polymerization, the polyether-polylactic acid composition is pelletized or smashed and the evaporation is carried out while being heated under a reduced pressure. In this case, it is preferable that the evaporation time is 3 hours or more, the temperature is 60 to 110°C and the reduced pressure is 13 to 1333P.

Whereas, an antioxidant or an ultraviolet stabilizer may be added as required to the polyether-polylactic acid composition within a range in which the effect of the present invention is not impaired. As the antioxidants, hindered phenols or hindered amines are mentioned.

The polyether-polylactic acid composition obtained by the present invention can be applied to various uses since it is low in residual lactide content and acid value, excellent in storage stability and melt stability, less in odor and good in hue. In particular, the polyether-polylactic acid composition of the present invention can preferably be used as an additive to polylactic acid-based polymer, and among them, in view points of being able to impart a function of preventing bleed out by controlling molecular weight and crystallinity of the polylactic acid segment, and having a softening effect of polylactic acid by the polyether segment, it can be used especially preferably as a plasticizer for polylactic acid.

By using the polyether-polylactic acid composition obtained by the present invention as a plasticizer for the polylactic acid-based polymer, it is possible to carry out mold processing by various methods such as inflation molding, extrusion molding, injection molding, laminate molding, press molding, and it is possible to mold by using conventional apparatuses used for multipurpose resins. Among them, it is useful to apply to wrapping materials or industrial articles by molding it to a film or sheet by inflation film forming, cast film forming or the like.

As the wrapping materials, for example, wrapping films for food, wrapping films for sundry goods, bags such as plastic shopping bags, general standard bags, garbage bags, heavy-duty sacks or the like are mentioned, and as industrial articles, binding tapes, agricultural multi films or agricultural sheets are mentioned.

Hereafter, an explanation of the polylactic acid-based film containing the polyether-polylactic acid composition is described. As a flow of mold processing, the polyether-polylactic acid composition of the present invention is mixed with the polylactic acid-based polymer, they are heated as required, and processed into a film state after melting.

The polylactic acid-based polymer means a polymer of which main component is L-lactic acid and/or D-lactic acid, and lactic acid based component in the polymer is 70 wt% or more, and homo polylactic acid consisting substantially of L-lactic acid and/or D-lactic acid is preferably used.

Furthermore, for the reason mentioned later, in order to exhibit the effect of preventing bleed out of the polyether-polylactic acid composition from the polylactic acid-based polymer, it is preferable that the polylactic acid-based polymer has a crystallinity. What the polylactic acid-based polymer has a crystallinity means that, after said polylactic acid-based polymer is sufficiently crystallized by heat and when a DSC (differential scanning calorimeter) measurement is carried out in an appropriate temperature range, a heat of crystal fusion based on polylactic acid component is observed.

In case where a uniform homopolylactic acid is used as polylactic acid-based polymer, for example, a homopolylactic acid of which optical purity is 70% or more should be used. On the other hand, for the purpose of imparting or improving a necessary function, 2 kinds or more homopolylactic acids of which optical purities are different may also be used together, for example, it is possible to use a crystalline homopolylactic acid and an amorphous homopolylactic acid together. In this case, ratio of the amorphous homopolylactic acid may be determined in a range which does not impair the effect of the present invention. And, in general, homopolylactic acid has a higher melting point as its optical purity becomes higher, for example, polyL-lactic acid of which optical purity is 98% or more has a melting point of approximately 170°C or so. When a high heat resistance is required as a molded article, it is preferable that a polylactic acid of which optical purity is 95% or more is contained as at least one kind of polylactic acid polymer.

As producing methods of the polylactic acid-based polymer, lactide method of 2 steps in which lactide which is cyclic dimer is once produced from L-lactic acid, D-lactic acid or DL-lactic acid (racemic mixture) as law material, and a ring-opening polymerization is carried out, and a direct polymerization method of one step in which said raw material is subjected directly to dehydration condensation in a solvent, are known. In the present invention, in case where homopolylactic acid is used, it may be produced by either methods, but in case of a polymer obtainable by the lactide method, since lactide contained in the polymer sublimes at molding, for example, it may cause a stain of cast drum at melt film forming, may cause a decrease of smoothness of film surface or may cause an odor, it is desirable to make the amount of lactide contained in the polymer to 0.3 wt% or less before a step of molding or melt film forming. On the other hand, in case of direct polymerization method, since there is substantially no problem caused by lactide, it is more preferable in view points of moldability and film forming ability.

It is desirable that the weight average molecular weight of the polylactic acid-based polymer of the present invention is, in order to make strength characteristics excellent when made into a molded film article, in general, at least 50,000, preferably 80,000 to 300,000 and further preferably 100,000 to 200,000.

Furthermore, the polylactic acid-based polymer of the present invention may be a copolymerized polylactic acid in which, other than L-lactic acid and D-lactic acid, other monomer component having ester forming ability is copolymerized. As the copolymerizable monomer components, other than hydroxycarboxylic acids such as glycolic acid, 3-hydroxybutyric acid, 4-hydroxybutyric acid, 4-hydroxyvaleric acid and 6-hydroxycaproic acid; compounds having plural hydroxyl groups in the molecule such as ethylene glycol, propylene glycol, butane diol, neopentyl glycol, polyethylene glycol, glycerol and pentaerythritol, and derivatives thereof; compounds having plural carboxylic acids in the molecule such as succinic acid, adipic acid, sebacic acid, fumaric acid, terephthalic acid, isophthalic acid, 2,6-naphthalene dicarboxylic acid, 5-sodium sulfoisophthalic acid and 5-tetrabutyl phosphonium sulfoisophthalic acid and derivatives thereof, are mentioned. Whereas, as the copolymeric component of the polylactic acid-based polymer, it is preferable to select a biodegradable component.

It is possible to obtain a polylactic acid-based film having a high flexibility by containing the polyether-polylactic acid composition, of which residual lactide content and acid value are controlled, to the polylactic acid-based polymer by the above-mentioned method. The polyether-polylactic acid composition is a composition having a polyether segment and a polylactic acid segment in which residual lactide content of 0.3 wt% or less and acid value of 50 equivalent/t or less are achieved by the above-mentioned means.

In case where a polylactic acid-based polymer and polyether-polylactic acid composition are melted, mixed and molded into a film state, the polyether segment in the polyether-polylactic acid composition is preferably a polyethylene glycol of a number average molecular weight 3,000 or more and 50,000 or less, and it is preferable that one or more crystalline polylactic acid segments of number average molecular weight 1500 or more and 10,000 or less of which main component is L-lactic acid or D-lactic acid are contained in a molecule. In case where a better softening effect is desired, it is preferable that a polyethylene glycol of a number average molecular weight 3,000 or more and 20,000 or less and one or more crystalline polylactic acid segments of number average molecular weight 1500 or more and 5,000 or less of which main component is L-lactic acid or D-lactic acid are contained.

Furthermore, in order to make the softening efficiency better, it is preferable that a weight ratio of the polylactic acid segment component in the composition is less than 50 wt% with respect to the whole composition. In case where this relation is satisfied, it is possible to obtain a predetermined anti-bleed composition with a smaller amount of addition.

Hereafter, production examples of the above-mentioned polyether-polylactic acid composition are shown, but production examples of the polyether-polylactic acid composition of the present invention are not limited thereto.

A polyethylene glycol (PEG) having hydroxyl end groups at both ends is prepared. Number average molecular weight (M PEG) of the polyethylene glycol (PEG) having hydroxyl end groups at both ends can be determined by GPC (gel permeation chromatography), etc. In a reaction system in which wA parts by weight of lactide is added to w B parts by weight of polyethylene glycol (PEG) having hydroxyl end groups at both ends, the lactide is sufficiently reacted by ring-opening addition polymerization with both hydroxyl end groups of the PEG, to obtain a block copolymer of substantially PLA(A)-PEG(B)-PLA(A) type. This reaction is carried out, as required, under coexistence of a catalyst such as tin octoate. The number average molecular weight of one polylactic acid segment of this polyether-polylactic acid composition can be determined as $(1/2) \times (wA/wB) \times MPEG$, and the weight ratio of the polylactic acid segment component with respect to the whole composition can be determined as $100 \times wA/(wA + wB)\%$. Furthermore, weight ratio of the polyether segment with respect to the whole composition can be determined substantially as $100 \times wB/(wA + wB)\%$. The molecular weight and polylactic acid segment or the like of the obtained composition are actually values having some distributions, but it is possible to obtain a compound of which main component is an A-B-A type block copolymer of a value obtainable by the above-mentioned equation.

Since the polylactic acid segment of the polyether-polylactic acid composition obtained by the above-mentioned method has a crystallinity, the polylactic acid-based polymer is apt to be incorporated into a crystal, and it functions to connect atoms of the polyether-polylactic acid composition and the polylactic acid-based polymer, and by this function, it is possible to prevent bleed out (migration) of the polyether-polylactic acid composition.

The amount to be added of the polyether-polylactic acid composition to be melted and mixed with the polylactic acid-based polymer is not especially limited, and in case where the whole weight in which the polylactic acid-based polymer and the polyether-polylactic acid composition after mixing is totaled is taken as 100 wt%, it is preferable if the weight ratio of the polyether segment in the polyether-polylactic acid composition is in the range of 10 to 50 wt%, since the softening effect and bleed out preventing effect can be achieved. In case where a sufficient softening effect is desired to be imparted to the polylactic acid-based polymer, it is preferable that the weight ratio of the polyether segment is 20 to 50 wt%, and a preferable range in which softening and mechanical strength are efficiently exhibited is 20 to 40 wt% in weight ratio of the polyether segment.

Furthermore, as methods for adding the above-mentioned polyether-polylactic acid composition to the polylactic acid-based polymer, for example, a method of mixing and stirring the polyether-polylactic acid composition in molten state after finishing the polymerization reaction by the method of the present invention to the polylactic acid-based polymer in molten state after finishing condensation polymerization reaction, a method of melting and mixing by a reaction vessel or an extruder or the like after blending chips of the polylactic acid-based polymer and chips of the composition, a method of continuously adding and mixing the plasticizer fluidized by heat or the like via a vent port while extruding the polylactic acid-based polymer by an extruder, a method of melting and mixing a blend chip of a master chip of the polylactic acid-based polymer into which the polyether-polylactic acid composition is contained at a high concentration and a homo chip of the polylactic acid-based polymer, or the like can be carried out.

In view point of making degree of polymerization of polylactic acid-based polymer high and preventing generation of lactide or residual low molecular weight compounds, the method of mixing the polyether-polylactic acid composition in molten state after finishing polymerization reaction by means of the present invention to the polylactic acid-based polymer in molten state after finishing condensation polymerization reaction is preferable, and in view point of multipurpose application of apparatus, the method of melting and mixing after blending the polylactic acid-based polymer chip and the composition chips by an extruder or the like is preferable.

As methods of film forming, it is possible to employ conventional methods such as inflation method, cast drum method, but in either cases, it is preferable to use the polylactic acid-based polymer chips and the polyether-polylactic acid composition chips which are dried just before film formation at 80˚C to 120˚C and under a degree of vacuum of 1333 Pa or less for 6 hours or more, in order to reduce the water content. At the film formation, the polylactic acid-based polymer chips and the polyether-polylactic acid composition chips which are melted and mixed by an extruder or the like can be melt extruded into a tube state or a film state by a known method through a slit-like die. In the inflation method, an undrawn film can be obtained by taking up a tube-like molten substance by a nip roll or the like and solidify by cooling, and in the cast drum method, an undrawn film can be obtained by cooling and solidifying a film-like molten substance extruded by closely contacting with a casting drum.

It is preferable that the temperature of extruder, polymer piping, die or the like is 200˚C or less, 190˚C or less is further preferable and 180˚C or less is more preferable. And, it is preferable that the residence time from the polylactic acid polymer composition is melted in an extruder and until extruded from a die is 20 minutes or less, 10 minutes or less is further preferable, and 5 minutes or less is more preferable. It is preferable that the cast drum temperature is 40˚C or less, and in order to prevent an adhesion to the drum, it is 25˚C or less, more preferably 20˚C or less. However, since a dew condensation may occur if the temperature is extremely low, 10˚C or more and 20˚C or less is more preferable.

Furthermore, it is preferable to use the polylactic acid-based film of the present invention after stretching since it becomes possible to make the polylactic acid-based polymer oriented to thereby accelerate crystallization while keeping transparency. It is preferable that the stretching ratio is 1.1 times or more for at least one direction, further preferably 1.1 to 10 times for at least one direction. By stretching in such a way, it is possible to make the polylactic acid-based polymer oriented and crystallized and, at the same time, it is possible to accelerate the polylactic acid segment in the polyether-polylactic acid composition being incorporated into the crystal, to thereby make it possible to strongly exhibit preventing effect of evaporation or bleed out. And, since strength properties of the film are improved by the orientation crystallization, it is possible to obtain a polylactic acid-based film having both of softness and strength.

As stretching methods of the polylactic acid-based film of the present invention, a method of biaxial stretching simultaneously with a film formation by inflation method, or a method of successively stretching an unstretched film obtained by a cast drum method and then, as required, stretching in the direction perpendicular to the first stage stretching direction, are mentioned.

Furthermore, the stretching condition of the polylactic acid-based film of the present invention can be carried out in an arbitrary way by appropriately controlling, according to desired thermal shrinkage, dimensional stability, strength and modulus. For example, it is preferable, in view points of stretchability or transparency, that the stretching temperature is carried out at the glass transition temperature of the polylactic acid-based polymer used or more and crystallization temperature or less, and it is preferable that the stretching ratio is arbitrary in the range of 1.1 times to 10 times in longitudinal direction and transverse direction of the film, respectively. Regarding the stretching ratio, especially, any stretching ratio of longitudinal direction and transverse direction may be high, or both may be the same. Whereas, when the stretching ratio of one direction exceeds 10 times, stretchability deteriorates to often occur film breakage and a stable stretchability may not be obtained. In addition, depending on stretching temperature or stretching (deformation) rate, the stretching may become ununiform, and a preferable stretching ratio of one direction is preferably 2 times or more, further preferably 2.5 times or more. And, for example, as stretching ratio for making a biaxially stretched film, as an areal ratio which is the areal ratio of films before and after stretching, it is preferably 4 times or more, further preferably 7 times or more.

Furthermore, even when any stretching method is employed, when a high crystallization ratio is desired, it is preferable, after stretching, to heat treat at a temperature of 100 to 135˚C for 10 seconds or more.

Whereas, in case where a film of the present invention is used, including cases where a stretching is not carried out, for example, when an inorganic nucleating agent such as talc or an organic nucleating agent such as erucamide is used together, like the orientation crystallization, the polylactic acid segment contained in the polyether-polylactic acid composition is incorporated into a crystal formed by the polylactic acid-based polymer which is the base, to accelerate the function to anchor the molecule of the polyether-polylactic acid composition to the base, and by this effect, the evaporation or bleed out (migration) of the polyether-polylactic acid composition may further be prevented.

The thickness of the films of the present invention is not specifically limited and may be set at an appropriate thickness according to characteristics required in the application, for example, softness, mechanical properties, transparency, biodegradability, but it generally is 5 μm or more and 1 mm or less, and especially 5 μm or more and 200 μm

or less is preferably selected. As wrap films for packaging, typically as wrap films for food packaging, the thickness is preferably selected within a range of 5 μm or more and 25 μm or less.

It is preferable that the film of the present invention has a film haze value of 0.0 to 5.0%. The film haze value is evaluated by the method described in Examples. In particular, in uses for wrap film for packaging, among them, in uses for wrap film for food packaging, it is preferable that the film haze value is 0.0 to 5.0%, since its content can be seen easily. More preferable range of the film haze value is 0.0 to 3.0%, and further preferable range is 0.0 to 1.5%. As the haze value becomes low, it becomes more preferable to see its content, but since it is impossible to make it less than 0.2%, its actual lower limit is 0.2%.

Furthermore, when a certain shieldability is desired such as for garbage bags or agricultural multi films, or in uses in which a low light transmission or a high absorption of sunlight or the like is preferable, for example, it is appropriate to add a colored pigment or the like, as required.

The polylactic acid-based film of the present invention may further comprise, as required, other components than the polyether-polylactic acid composition within a range not deteriorating the advantage of the present invention. For example, known plasticizers, antioxidation agents, ultraviolet stabilizers, anticoloring agents, delustering agents, deodorants, flame retardants, weathering agents, antistatics, mold releasing agents, antioxidants, ion exchanging agents, fine inorganic particles or organic compounds serving as coloring pigments may be added. As the known plasticizers, phthalic ester-based ones such as diethyl phthalate, dioctyl phthalate and dicyclohexyl phthalate; aliphatic dibasic acid ester-based ones such as di-1-butyl adipate, di-n-octyl adipate, di-n-butyl sebacate and di-2-ethylhexyl azelate; phosphoric acid ester-based ones such as diphenyl-2-ethylhexyl phosphate and diphenyl octyl phosphate; hydroxy-polycarboxylic acid ester-based ones such as tributyl acetyl citrate, tri-2-ethyl hexyl acetyl citrate and tributyl citrate; fatty acid ester-based ones such as methyl acetyl ricinoleate and amyl stearate; polyhydric alcohol ester-based ones such as glycerol triacetate and triethylene glycol dicaprylate; epoxy-based plasticizers such-as epoxidized soybean oil, epoxidized linseed oil fatty acid butyl ester and octyl epoxystearate; polyester-based plasticizers such as polypropylene glycol sebacic acid ester; polyalkylene ether based ones, ether ester-based ones and acrylate-based ones, are mentioned. Whereas, from the viewpoint of safety, plasticizers approved by U.S. Food and Drug Administration (FDA) are preferably used. As the antioxidants, hindered phenol-based ones and hindered amine-based ones are exemplified. As the coloring pigments, other than inorganic pigments such as carbon black, titanium oxide, zinc oxide and iron oxide, organic pigments such as cyanine-based ones, styrene-based ones, phthalocyanine-based ones, anthraquinone-based ones, perinone-based ones, isoindolinone-based ones, quinophthalone-based ones, quinacridone-based ones and thioindigo-based ones, can be used. And, for improving the slipping property and antiblocking property of the molded articles, fine inorganic particles can be used. For example, silica, colloidal silica, alumina, alumina sol, kaolin, talc, mica and calcium carbonate or the like can be used. The average particle size thereof is not specifically limited but is preferably from 0.01 to 5 μm, further preferably from 0.05 to 3 μm, and most preferably from 0.08 to 2 μm.

Examples

Hereafter, the present invention is further concretely explained by examples and comparative examples, but the present invention is not limited by the following examples. Whereas, physical properties, evaluations were determined and evaluated by the following way.

Hereafter, "sample" in the description of items 1 to 8 denotes the "polyether-polylactic acid composition" of the present invention.

1. Residual lactide content

It was measured by gas chromatograph. By using a predetermined amount of lactide, after preparing a calibration curve, the measurement was carried out by treating the polyether-polylactic acid composition in the following way.

[Preparing method of liquid]

(1) Preparation of mother liquid for quantitative analysis

(1-1) (Preparation of internal standard mother liquid): Approximately 1g of 2,6-dimethyl-γ-pyrone is taken into a messflask (100 ml), dissolved to the specified volume with methylene chloride.
(1-2) (Preparation of standard mother liquid): Approximately 1g of D,L-lactide is taken into a messflask (100 ml), and diluted to the specified volume with methylene chloride.

(2) Preparation of sample liquid

(2-1) Approximately 1g of polyether-polylactic acid composition is taken into a messflask (20 ml).
(2-2) Methylene chloride is added and dissolved therein, 1 ml of the internal standard mother liquid is added and diluted to the specified volume with methylene chloride.
(2-3) Acetone 3 ml is taken into a messflask (20 ml) and the solution of (2-2) 1 ml is added thereto.
(2-4) While subjecting to an ultrasonic stirring, cyclohexane is dropped to dilute to the specified volume (polylactic acid is separated gradually and precipitates. Lactide is extracted by the solution.).
(2-5) Filtered with a disc filter (PTFE 0.45 $\mu$m) and the supernatant is taken out.
(2-6) Measured by a gas chromatograph.

(3) Preparation of standard solution

(3-1) The standard mother liquids (0.2 ml, 0.5 ml, 1,0 ml , 3.0 ml) are respectively taken into messflask (20 ml).
(3-2) The internal standard liquid 1 ml is added and diluted to the specified value with methylene chloride.
(3-3) Acetone 3 ml is taken into a messflask (20 ml) and the solution (3-2) 1 ml is added and diluted with cyclohexane to the specified volume.
(3-4) Filtered by a disc filter (PTFE 0.45 $\mu$m).
(3-5) Measured by a gas chromatograph.

[GC measurement condition]

Instrument: Shimadzu gas chromatograph GC-17A (split method)
Column: J&W Co., DB-17MS 0.25 mm $\times$ 30m 0.25 $\mu$m

Instrument condition:
(1) Gas used:

| | |
|---|---|
| Carrier N$_2$ | 75 kPa (approximately 30 ml/min) |
| Air | 50 kPa (approximately 500 ml /min) |
| Hydrogen | 60 kPa (approximately 50 ml /min) |

(2) Setting temperature

| | |
|---|---|
| : Evaporation chamber | 180˚C |
| : Detector | 220˚C |
| : Column | heating program |

Maintained at 80˚C for 1 min. After that it is heated at 10 ˚C /min up to 200˚C and then maintained at 200˚C for 5min.

| | |
|---|---|
| (3) Column inlet pressure: | 100 kPa (AFC control) |
| (4) Total flow rate: | 20 ml/min (AFC control) |
| (5) Detector sensitivity: | DET 0 or 1 |
| (6) Sample injection amount: | 1 $\mu$l |
| Detection limit: | 0.01 % (100 ppm) |

2. Acid value

It was measure by a neutralization titration. Sample 0.2g was weighed and after dissolved in chloroform, several drops of an indicator were added, and titrated with N/25 ethanolic potassium hydroxide, and the acid value is determined by the following equation.

$$\text{Acid value [KOH mg/g]} = \{(A - B) \times f \times 1/25 \times 56.11\}/W$$

$$\text{Acid value [equivalent/t ]} = \text{[KOH mg/g]} \times 1{,}000/56.11$$

Whereas,
A: amount of KOH (ml) required for neutralization of sample
B: amount of KOH (ml) required for neutralization of chloroform blank
f: titer of KOH
W: amount of sample used (g).

### 3. Number average molecular weight (Mn)

Sample is dissolved in THF (tetrahydrofuran) such that the concentration is 1 mg/cc, a time until a peak is detected was measured by using GPC (gel permeation chromatography), and a number average molecular weight was converted from polystyrene calibration curve of known molecular weight.

[Regarding GPC instrument]

| | |
|---|---|
| Instrument: | LC-10A series produced by Shimadzu Corp. |
| Solvent: | THF (for use of high speed liquid chromatograph) |
| Detector: | RI detector (RID-10A) |
| Column: | Shodex (trademark) KF-806L, KF-804L (300 mm $\times$ 8 mm$\varphi$, respectively) produced by Showa Denko K.K. are connected in series in this order |
| Column temperature: | 30˚C |
| Flow rate: | 1.0 ml/min (online degassing system by He). |

The polystyrene used for preparation of the calibration curve is Shodex (trademark) polystyrene standard and 6 kinds of Std. Nos. S-3850, S-1190, S-205, S-52.4, S-13.9 and S-1.31 were used. These were dissolved in THF and by a GPC instrument, times until peaks were detected were measured. Since the molecular weights were known, the times of detection of peaks and molecular weights were plotted on a vertical line and a horizontal line, and a calibration curve close to a cubic equation was prepared and used.

### 4. Analyzing method of composition

Success or failure of copolymerization reaction at production of the polyether-polylactic acid composition was analyzed by using a $^1$H-NMR (nuclear magnetic resonance spectrometer). Since a peak based on bonded portion of polylactic acid segment and polyether appears, whether copolymerized or not was decided by the peak.

Furthermore, as to crystallinity of the polylactic acid segment, it was determined by whether a heat of crystal fusion based on the polylactic acid component is observed or not when a DSC (differential scanning calorimeter) measurement was carried out at an appropriate temperature range after the composition was once thermally crystallized.

Furthermore, regarding number average molecular weight of the polylactic acid segment of the composition and number average molecular weight of the polyether segment, they can be calculated by integrated intensity of $^1$H-NMR and GPC. As the number average molecular weight of the polyether to be used for synthesis, a known one was used and by comparing with a sample to which a polylactic acid segment was copolymerized, a number average molecular weight of the polylactic acid segment can be determined. And, even in case where a number average molecular weight of the polyether is unknown, by measuring GPC of the whole composition to determine the whole number average molecular weight, it is possible to find out from the number average molecular weight of PLA segment calculated from NMR.

$$Mn[PLA] = 72 \times H(e) \times \int(PL) \times Mn[E]/\int(E) \times Mn[e]$$

$$\text{Actually measured value} = Mn[PLA] + Mn[E] + 6500$$

Whereas, the codes are as follows.

Mn[PLA]: number average molecular weight of PLA segment
H(e): number of proton per unit molecule of polyether
∫(PL): integrated intensity of $^1$H-NMR of PLA segment
Mn[E]:number average molecular weight of polyether
∫(E): integrated intensity of $^1$H-NMR of polyether
M[e]: unit molecular weight of polyether

5. Melting point

It was measured by a differential scanning calorimeter (RDC 220 produced by Seiko Instruments Inc.). The endothermic peak temperature when a sample 5 mg is heated from 20˚C to 200˚C at 20˚C /min was taken as melting point. In case where plural endothermic peaks are present, the endothermic peak of highest temperature is taken as melting point.

6. Storage stability

After measuring acid value (H1) of sample before starting storage, the sample was left for 6 months at 5˚C in a refrigerator. After that, it was taken out from the refrigerator and acid value (H2) was measured in the same way as before the start. Increased amount of the acid value of before and after starting the storage is considered as (H2) - (H1), and grouped and evaluated as the following 3 classes.
oo (excellent): Increased amount of acid value is less than 10 equivalent/t.
o (good): increased amount of acid value is 10 equivalent/t or more and less than 50 equivalent/t.
× (poor): increased amount of acid value is 50 equivalent/t or more.

7. Melt stability

After residual lactide content (L1), acid value (h1) and number average molecular weight (Mn1) of sample before test was measured, the sample 20g was weighed and put into a glass bottle with a top, and the atmosphere was replaced by blowing nitrogen gas, which was passed through a dried silica tube, via a silicone tube for 5 minutes. After the glass bottle was put with the top, the sample was melted and maintained for 20 minutes in a silicone bath heated to 160˚C for 20 minutes, and taken out. Residual lactide content (L2), acid value (h2), and number average molecular weight (Mn2) of the cooled and solidified sample were measured.

Increased amount of residual lactide was considered as (L2) - (L1), increased amount of acid value was considered as (h2) - (h1) and decreased amount of number average molecular weight was considered as (Mn1) - (Mn2), respective amounts were evaluated as follows.
Increased amount of residual lactide
oo (excellent): increased amount of residual lactide is less than 0.10 wt%
o (good): increased amount of residual lactide is 0.10 wt% or more and less than 1.00 wt%
× (poor): increased amount of residual lactide is 1.00 wt% or more Increased amount acid value
oo (excellent): increased amount of acid value is less than 10 equivalent/t
o (good): increased amount of acid value is 10 equivalent/t or more and less than 50 equivalent/t
× (poor): increased amount of acid value is 50 equivalent/t or more Decreased amount of number average molecular weight
□ (excellent): decreased amount of number average molecular weight is less than 1,000
o (good): decreased amount of number average molecular weight is 1,000 or more and less than 3,000
× (poor): decreased amount of number average molecular weight is 3,000 or more
Since the above 3 items are in a cause-and-effect relation with the seed that accelerates decomposition, those having × evaluation even in one of these are considered to have no melt stability, and decided its overall evaluation as ×.
On the other hand, those all of which 3 items were oo evaluation were taken as overall evaluation oo, and other than those were taken as overall evaluation o.

8. Hue

After finishing the polymerization reaction, the sample was solidified by cooling, and its hue was determined by visually inspection.
Hereafter, "composition" of the description from [Production method of film] to item 11 denotes the "polyether-polylactic acid composition" of the present invention.

[Production method of polylactic acid-based film]

In case where the whole weight, in which the polylactic acid-based polymer and the composition obtained in the following examples or comparative examples are totaled, is made as 100 wt%, an amount (W1) of the composition chips in which weight ratio of polyether segment in the composition is 20 wt% and the polylactic acid-based polymer chips (100 - (W1)) wt% are prepared. The polylactic acid-based polymer used is a homopolylactic acid of which L-lactic acid is 95% and weight average molecular weight is 120,000.

From these composition chips and the polylactic acid-based polymer chip, water component was removed under the following condition. Composition chip: temperature 80°C, degree of vacuum 1333 Pa, 3 hours Polylactic acid chip: temperature 110°C, degree of vacuum 1333 Pa, 3 hours After blending these dried composition chips and the polylactic acid-based polymer chips in the above-mentioned ratio, they were fed to a twin screw extruder, melted and mixed at 170 to 220°C, extruded from a die having a straight slit, and cooled to solidify by a cast drum of 20°C to prepare an unstretched film. Next, both ends of this unstretched film were held, uniformly stretched in an oven heated to a temperature of 80 to 110°C, such that their lengths would be 3 times of the original length in longitudinal direction (MD) of the film and in the direction perpendicular thereto (TD), respectively, to obtain a film of thickness 10 μm.

9. Durability of film

The polylactic acid-based film obtained by the above-mentioned [Production method of polylactic acid-based film] were cut into A4 size × 5 sheets, papers were inserted therebetween and maintained in a constant-temperature, constant-humidity bath at a temperature of 30°C and a humidity of 85%RH for 7 days, and observed elongation change between before and after 7 days storage.

The elongations were measured by Tensilon.

The measurements were carried out at sample length 50 mm, width 10 m, n = 5 (each MD and TD), test speed 300 mm/min and elongation at break was calculated in %. Hereafter, equation for calculating the elongation retention and evaluation criteria are shown.

$$\text{Elongation retention (\%)} = \text{elongation at break after storage/elongation at break before storage} \times 100$$

oo (excellent): elongation retention is 75% or more
o (good): elongation retention is 50% or more and less than 75%
× (poor): elongation retention is less than 50%
Furthermore, in cases where the composition bled out during storage in the a constant-temperature, constant-humidity bath, the sample was excluded from the evaluation.

10. Odor of film

2 stainless steel airtight containers of internal capacity 7L were prepared, and in one container of them, 20 sheets of the polylactic acid-based film obtained by the above-mentioned [Production method of polylactic acid-based film] which was cut into A4 size were put. After storing for 3 days under an atmosphere of a temperature 23°C and a humidity 65 %RH, took off tops of the 2 container, smell the odors and the odor intensity was evaluated according to the following criteria.

| Odor intensity | Detail |
| --- | --- |
| 0 | no odor |
| 1 | scarcely detectable odor |
| 2 | odor capable of finding what of |
| 3 | easily detectable odor |
| 4 | strong odor |
| 5 | intensive odor |

* The criteria in Central Council for Environmental Pollution Control was used.

The evaluation was carried out by 4 members, respective results of odor intensity were averaged, and the following evaluation was carried out.

○○ (excellent): average of odor intensities is less than 2
○ (good): average of odor intensities is 2 or more and less than 3
× (poor): average of odor intensities is 3 or more

11. Bleed out test

For the polylactic acid-based film obtained by the above-mentioned [Production method of polylactic acid-based film] which was subjected beforehand to a humidity control under an atmosphere of temperature 23°C, humidity 65 %RH for 24 hours, measured the weight before treatment, and after treating in distilled water of 90°C for 30 min, subjected again to the humidity control in the same condition as that of before the treatment and measured the weight. Weight decrease (%) was calculated by, weight decrease (%) = {(weight before treatment) - (weight after treatment)}/ (weight before treatment) × 100.

12. Film haze value

The polylactic acid-based film obtained by the above-mentioned [Production method of polylactic acid-based film] was cut out into longitudinal direction 40 mm and transverse direction 30 mm, and subjected to a humidity control under an atmosphere of temperature 23°C and humidity 65 %RH for 24 hours. According to JIS K 7136, the film haze value of this sample was measured under an atmosphere of 23°C by using Haze meter HGM-2DP (Suga Test Instruments Co.) 5 times in total and its average was determined.

Whereas, the film haze value obtainable by the above-mentioned haze meter is the value obtainable by dividing scattered light transmittance by whole light transmittance and multiplied by 100.

[Example 1]

After polyethylene glycol (number average molecular weight 10,000) 63.3 wt% was dehydrated at 140°C for 30 minutes under reduced pressure, L-lactide 36.7 wt% was added, the atmosphere was a replaced with an inert gas, both components were melted and mixed at 160°C for 20 minutes, and tin octoate 0.1 wt% was added as an esterifying catalyst.

Then for 2 hours, the mixture was stirred at 160°C under nitrogen atmosphere, phosphoric acid crystal 0.075 wt% was added thereto after finishing the reaction, stirred for 20 minutes and a composition was obtained. From a result of GPC measurement, a lactic acid-based polyester having number average molecular weight 22,000 (converted into polystyrene) which is larger than the number average molecular weight of the polyethylene glycol which is the starting material, was confirmed.

The peak of GPC was single and a single copolymer was produced. The residual lactide was 2.2 wt%. From this lactic acid-based polyester composition (polyether-polylactic acid composition), residual lactide was removed under degree of vacuum 4 Torr and at 140°C. In 60 minutes, the lactide became detectable limit or less. Result of measuring acid value was 30 equivalent/t, and a decrease of number average molecular weight was not observed.

[Example 2]

After polyethylene glycol (number average molecular weight 20,000) 77.5 wt% was dehydrated at 140°C for 30 minutes under a reduced pressure, L-lactide 22.5 wt% was added, the atmosphere was replaced with an inert gas, both components were melted and mixed at 160°C for 20 minutes, and tin octoate 0.15 wt% was added as an esterifying catalyst.

Then for 2 hours, the mixture was reacted at 160°C under nitrogen atmosphere, phosphorous acid 0.09 wt% was added thereto after finishing the reaction, stirred for 20 minutes and a composition was obtained. From a result of GPC, a lactic acid-based polyester having number average molecular weight 30,000 (converted into polystyrene) which is larger than the number average molecular weight of the polyethylene glycol which is the starting material, was confirmed.

The peak of GPC was single and a single copolymer was produced. The residual lactide was 2.2 wt%. From this lactic acid-based polyester composition (polyether-polylactic acid composition), residual lactide was removed under degree of vacuum 4 Torr and at 160°C. In 60 minutes, the lactide became 0.1 wt%. Acid value was 50 equivalent/t, and a decrease of number average molecular weight was not observed.

[Reference Example 3]

After polyethylene glycol (number average molecular weight 10,000) 63.3 wt% was dehydrated at 140˚C for 30 minutes under a reduced pressure, L-lactide 41.1 wt% was added, the atmosphere was replaced with an inert gas, both components were melted and mixed at 160˚C for 20 minutes, and tin octoate 0.1 wt% was added as an esterifying catalyst.

Then for 2 hours, the mixture was reacted at 160˚C, dimethyl phosphate 0.28 wt% was added thereto after finishing the reaction, stirred for 20 minutes, and a polyether-polylactic acid composition was synthesized. It was confirmed to be a composition of number average molecular weight 21,000 (converted into polystyrene). The residual lactide was 2.8 wt%. From this lactic acid-based polyester composition (polyether-polylactic acid composition), residual lactide was removed under degree of vacuum 4 Torr and at 160˚C. In 40 minutes, the lactide became 0.3 wt%. Acid value was 10 equivalent/t, and a decrease of number average molecular weight was not observed.

[Example 4]

Into a 3L round bottom flask, polyethylene glycol (number average molecular weight 10,000) 56 wt% was put, the atmosphere was replaced with nitrogen which was passed through a dried silica gel tube, and heated to 150˚C by a mantle heater to be dissolved.

After that, stirring was started by using a semicircular stirrer to dehydrate under a reduced pressure at a temperature of 150˚C and a degree of vacuum of 133 Pa for 30 minutes. The water content of the polyethylene glycol was 650 ppm.

L-lactide (optical purity 99.5%) 44 wt% was heated to 110˚C in a separate flask and melted. The water content of the L-lactide was 600 ppm.

Into the flask in which the polyethylene glycol was put, the melted lactide was added, the atmosphere was replaced with nitrogen which was passed through a dried silica gel tube, and stirred at 150˚C for 20 minutes to mix the both components.

Next, tin octoate 0.025 parts by weight was added as a polymerization catalyst, the atmosphere was replaced with nitrogen which was passed through a dried silica gel tube, and stirred at 180˚C for 3 hours.

After stirring for 3 hours, phosphoric acid crystal melted at 80˚C 0.019 parts by weight was added into a 5 ml screw tube, the atmosphere was replaced with nitrogen which was passed through a dried silica gel tube, and stirred at 180˚C for 20 minutes.

At this time, a part of the composition was sampled and as results of measuring GPC, melting point, NMR and residual lactide content, it was a composition having number average molecular weight 16,500 and melting point 138˚C, and it was confirmed to be a copolymer of polyether and polylactic acid. However, residual lactide content was 2.14 wt%.

Then, when the composition in the flask was subjected to an evaporation under reduced pressure at 140˚C, under degree of vacuum 133 Pa for 180 minutes to obtain a composition, residual lactide content became 0.05 wt%.

As results of measuring GPC, acid value, melting point and NMR, it was confirmed to be a polyether-polylactic acid composition having a number average molecular weight of 16,500, an acid value of 30 equivalent/t and a melting point of 140˚C.

[Example 5]

Into a 3L round bottom flask, polyethylene glycol (number average molecular weight 10,000) 56 wt% was put, the atmosphere was replaced with nitrogen which was passed through a dried silica gel tube, and heated to 150˚C by a mantle heater to be dissolved.

After that, a stirring was started by using a semicircular stirrer to dehydrate under a reduced pressure at a temperature of 150˚C and a degree of vacuum of 1333 Pa for 40 minutes. The water content of the polyethylene glycol was 800 ppm.

L-lactide of optical purity 97% 44 wt% was heated to 110˚C in a separate flask and melted. The water content of the L-lactide was 650 ppm.

Into the flask in which the polyethylene glycol was put, the melted lactide was added, the atmosphere was replaced with nitrogen which was passed through a dried silica gel tube, and stirred at 150˚C for 20 minutes to mix the both components.

Next, tin octoate 0.05 parts by weight was added as a polymerization catalyst, the atmosphere was replaced with nitrogen which was passed through a dried silica gel tube, and stirred at 180˚C for 3 hours.

After stirring for 3 hours, phosphoric acid/phosphorous acid, which worked as a catalyst activity reducing agent, was weighed such that the weight ratio was 1/1 into a 5 ml screw tube, heated to 80˚C to be melted and mixed, and the phosphoric acid/phosphorous acid mixed liquid 0.05 parts by weight was added. Next, the atmosphere was replaced with nitrogen which was passed through a dried silica gel tube, and stirred at 180˚C for 20 minutes.

At this time, a part of the composition was sampled and as results of measuring GPC, melting point, NMR and residual lactide content, it was a composition having number average molecular weight 16,100 and melting point 141˚C, and it was confirmed to be a copolymer of polyether and polylactic acid. However, residual lactide content was 2.69 wt%.

Then, when the composition in the flask was subjected to an evaporation under reduced pressure at 140˚C, under degree of vacuum 133 Pa for 180 minutes to obtain a composition, residual lactide content became 0.13 wt%.

As results of measuring GPC, acid value, melting point and NMR, it was confirmed to be a polyether-polylactic acid composition having a number average molecular weight of 16,000, an acid value of 45 equivalent/t and a melting point of 140˚C.

[Reference Example 6]

Into a 3L round bottom flask, polyethylene propylene oxide (number average molecular weight 6,600) 37 wt% was put, the atmosphere was replaced with nitrogen which was passed through a dried silica gel tube, and heated to 150˚C by a mantle heater to be dissolved.

After that, a stirring was started by using a semicircular stirrer to dehydrate under a reduced pressure at a temperature of 150˚C and a degree of vacuum of 1333 Pa for 30 minutes. The water content of the polyethylene propylene oxide was 780 ppm.

L-lactide of optical purity 97% 63 wt% was heated to 110˚C in a separate flask and melted. The water content of the L-lactide was 650 ppm.

Into the flask in which the polyethylene propylene oxide was put, the melted lactide was added, the atmosphere was replaced with nitrogen which was passed through a dried silica gel tube, and stirred at 150˚C for 20 minutes to mix the both components.

Next, tin octoate 0.1 parts by weight was added as a polymerization catalyst, the atmosphere was replaced with nitrogen which was passed through a dried silica gel tube, and stirred at 160˚C for 3 hours.

After stirring for 3 hours, dimethyl phosphate 0.34 parts by weight was added and the atmosphere was replaced with nitrogen which was passed through a dried silica gel tube, and stirred at 180˚C for 20 minutes.

At this time, a part of the composition was sampled and as results of measuring GPC, melting point, NMR and residual lactide content, it was a composition having number average molecular weight 9,200 and melting point 110˚C, and it was confirmed to be a copolymer of polyether and polylactic acid. However, residual lactide content was 1.61 wt%.

Then, when the composition in the flask was subjected to an evaporation under reduced pressure at 140˚C, under degree of vacuum 133 Pa for 180 minutes to obtain a composition, residual lactide content became 0.28 wt%.

As results of measuring GPC, acid value, melting point and NMR, it was confirmed to be a polyether-polylactic acid composition having a number average molecular weight of 9,000, an acid value of 50 equivalent/t and a melting point of 110˚C.

[Example 7]

Into a polymerization test tube of volume 500 mL, polyethylene glycol (number average molecular weight 10,000) 63.3 wt% was put, the atmosphere was replaced with nitrogen which was passed through a dried silica gel tube, and heated to 140˚C by an oil bath to be dissolved.

After that, a stirring was started by using a spiral stirrer to dehydrate under a reduced pressure at a temperature of 140˚C and a degree of vacuum of 13 Pa for 30 minutes. The water content of the polyethylene glycol was 680 ppm. D-lactide of optical purity 98% 36.7 wt% was heated to 110˚C in a separate flask and dissolved. The water content of the D-lactide was 650 ppm.

Into the test tube in which the polyethylene glycol was put, the dissolved lactide was added, the atmosphere was replaced with nitrogen which was passed through a dried silica gel tube, and stirred at 160˚C for 20 minutes to mix the both components. Next, tin octoate 0.1 parts by weight was added as a polymerization catalyst, the atmosphere was replaced with nitrogen which was passed through a dried silica gel tube, and stirred at 160˚C for 2 hours.

After stirring for 2 hours, phosphoric acid crystal melted at 80˚C in a 5 ml screw tube 0.075 parts by weight was added and the atmosphere was replaced with nitrogen which was passed through a dried silica gel tube, and stirred at 160˚C for 20 minutes.

At this time, a part of the composition was sampled and as results of measuring GPC, NMR and residual lactide content, it was confirmed to be a polyether-polylactic acid composition having number average molecular weight 22,000. However, residual lactide content was 2.2 wt%.

Then, when the polyether-polylactic acid composition in the polymerization test tube was subjected to an evaporation under reduced pressure at 140˚C, under degree of vacuum 52 Pa for 60 minutes to obtain a composition, residual lactide content was detectable limit or less.

As results of measuring GPC, acid value, melting point and NMR, it was confirmed to be a polyether-polylactic acid composition having a number average molecular weight of 22,000, an acid value of 30 equivalent/t and a melting point of 140˚C.

[Example 8]

Into a polymerization test tube of volume 500 mL, polyethylene glycol (number average molecular weight 20,000) 77.5 wt% was put, the atmosphere was replaced with nitrogen which was passed through a dried silica gel tube, and heated to 140˚C by an oil bath to be dissolved.

After that, a stirring was started by using a spiral stirrer to dehydrate under a reduced pressure at a temperature of 140˚C and a degree of vacuum of 1333 Pa for 30 minutes. The water content of the polyethylene glycol was 1,000 ppm.

L-lactide of optical purity 99.5% 22.5 wt% was heated to 100˚C in a separate flask and dissolved. The water content of the L-lactide was 700 ppm.

Into the test tube in which the polyethylene glycol was put, the dissolved lactide was added, the atmosphere was replaced with nitrogen which was passed through a dried silica gel tube, and stirred at 160˚C for 20 minutes to mix the both components.

Next, tin octoate 0.15 parts by weight was added as a polymerization catalyst, the atmosphere was replaced with nitrogen which was passed through a dried silica gel tube, and stirred at 160˚C for 2 hours.

After stirring for 2 hours, phosphorous acid 0.09 parts by weight melted at 80˚C in a 5 ml screw tube was added and the atmosphere was replaced with nitrogen which was passed through a dried silica gel tube, and stirred at 160˚C for 20 minutes.

At this time, a part of the composition was sampled and as results of measuring GPC, NMR and residual lactide content, it was confirmed to be a polyether-polylactic acid composition having number average molecular weight 30,000. However, residual lactide content was 2.6 wt%.

Then, when the polyether-polylactic acid composition in the polymerization test tube was subjected to an evaporation under reduced pressure at 160˚C, under degree of vacuum 52 Pa for 60 minutes to obtain a composition, residual lactide content was 0.1 wt%.

As results of measuring GPC, acid value, melting point and NMR, it was confirmed to be a polyether-polylactic acid composition having a number average molecular weight of 30,000, an acid value of 50 equivalent/t and a melting point of 135˚C.

[Reference Example 9]

Into a polymerization test tube of volume 500 mL, polyethyleneglycol (number average molecular weight 10,000) 63.3 wt% was put, the atmosphere was replaced with nitrogen which was passed through a dried silica gel tube, and heated to 140˚C by an oil bath to be dissolved.

After that, a stirring was started by using a spiral stirrer to dehydrate under a reduced pressure at a temperature of 160˚C and a degree of vacuum of 13 Pa for 30 minutes. The water content of the polyethylene glycol was 600 ppm.

After L-lactide of optical purity 99.5% 41.1 wt% was heated to 110˚C in a separate polymerization test tube and dissolved, an evaporation under reduced pressure was carried out at a degree of vacuum of 52 Pa for 10 minutes. The water content of the L-lactide was 600 ppm.

Into the test tube in which the polyethylene glycol was put, the dissolved lactide was added, the atmosphere was replaced with nitrogen which was passed through a dried silica gel tube, and stirred at 160˚C for 20 minutes to mix the both components.

Next, tin octoate 0.1 parts by weight was added as a polymerization catalyst, the atmosphere was replaced with nitrogen which was passed through a dried silica gel tube, and stirred at 160˚C for 2 hours.

After stirring for 2 hours, dimethyl phosphate 0.28 parts by weight was added and the atmosphere was replaced with nitrogen which was passed through a dried silica gel tube, and stirred at 160˚C for 20 minutes.

At this time, a part of the composition was sampled and as results of measuring GPC, NMR and residual lactide content, it was confirmed to be a polyether-polylactic acid composition having number average molecular weight 21,000. However, residual lactide content was 2.8 wt%.

Then, when the polyether-polylactic acid composition in the polymerization test tube was subjected to an evaporation under reduced pressure at 160˚C, under degree of vacuum 52 Pa for 40 minutes to obtain a composition, residual lactide content was 0.3 wt%.

As results of measuring GPC, acid value, melting point and NMR, it was confirmed to be a polyether-polylactic acid composition having a number average molecular weight of 30,000, an acid value of 10 equivalent/t and a melting point of 130˚C.

[Comparative example 1]

Into a 3L round bottom flask, polyethylene glycol (number average molecular weight 10,000) 56 wt% was put, the atmosphere was replaced with nitrogen which was passed through a dried silica gel tube, and heated to 150˚C by a mantle heater to be dissolved.

After that, stirring was started by using a semicircular stirrer to dehydrate under a reduced pressure at a temperature of 150˚C and a degree of vacuum of 133 Pa for 5 minutes. The water content of the polyethylene glycol was 1,500 ppm.

L-lactide of optical purity 97% 44 wt% was weighed. The water content of the L-lactide was 1,000 ppm.

Into the flask in which the polyethylene glycol was put, the weighed lactide was added, the atmosphere was replaced with nitrogen which was passed through a dried silica gel tube, and stirred at 150˚C for 20 minutes to mix the both components.

Next, tin octoate 0.025 parts by weight was added as a polymerization catalyst, the atmosphere was replaced with nitrogen which was passed through a dried silica gel tube, and stirred at 180˚C for 3 hours.

After stirring for 3 hours, phosphoric acid crystal melted at 80˚C in a 5 ml screw tube 0.032 parts by weight was added, the atmosphere was replaced with nitrogen which was passed through a dried silica gel tube, and stirred at 180˚C for 20 minutes.

At this time, a part of the composition was sampled and as results of measuring GPC, melting point, NMR and residual lactide content, it was a composition having number average molecular weight 16,000 and melting point 140˚C, and it was confirmed to be a copolymer of polyether and polylactic acid. However, residual lactide content was 2.11 wt%.

Then, when the composition in the flask was subjected to an evaporation under reduced pressure at 140˚C, under degree of vacuum 133 Pa for 180 minutes to obtain a composition, residual lactide content became 0.30 wt%.

As results of measuring GPC, acid value, melting point and NMR, it was confirmed to be a polyether-polylactic acid composition having a number average molecular weight of 16,000, an acid value of 80 equivalent/t and a melting point of 140˚C.

(Comparative example 2)

Into a 3L round bottom flask, polyethylene glycol (number average molecular weight 10,000) 56 wt% was put, the atmosphere was replaced with nitrogen which was passed through a dried silica gel tube, and heated to 150˚C by a mantle heater to be dissolved.

After that, stirring was started by using a semicircular stirrer to dehydrate under a reduced pressure at a temperature of 150˚C and a degree of vacuum of 133 Pa for 30 minutes. The water content of the polyethylene glycol was 650 ppm.

L-lactide of optical purity 97% 44 wt% was heated in a separate flask at 110˚C to be melted. The water content of the L-lactide was 600 ppm.

Into the flask in which the polyethylene glycol was put, the melted lactide was added, the atmosphere was replaced with nitrogen which was passed through a dried silica gel tube, and stirred at 150˚C for 20 minutes to mix the both components.

Next, tin octoate 0.05 parts by weight was added as a polymerization catalyst, the atmosphere was replaced with nitrogen which was passed through a dried silica gel tube, and stirred at 180˚C for 3 hours.

After stirring for 3 hours, phosphoric acid crystal melted at 80˚C in a 5 ml screw tube 0.027 parts by weight was added, the atmosphere was replaced with nitrogen which was passed through a dried silica gel tube, and stirred at 180˚C for 20 minutes.

At this time, a part of the composition was sampled and measurements of GPC, acid value, melting point, NMR and residual lactide content showed that the composition had a number average molecular weight 16,000, acid value 48 equivalent/t, and melting point 140˚C, and that it was a polyether-polylactic acid composition. Residual lactide content was 2.14 wt%.

[Comparative example 3]

Into a 3L round bottom flask, polyethylene glycol (number average molecular weight 10,000) 56 wt% was put, the atmosphere was replaced with nitrogen which was passed through a dried silica gel tube, and heated to 150˚C by a mantle heater to be dissolved.

After that, stirring was started by using a semicircular stirrer to dehydrate under a reduced pressure at a temperature of 150˚C and a degree of vacuum of 133 Pa for 30 minutes. The water content of the polyethylene glycol was 650 ppm.

L-lactide of optical purity 97% 44 wt% was heated in a separate flask at 110˚C to be melted. The water content of the L-lactide was 600 ppm.

Into the flask in which the polyethylene glycol was put, the melted lactide was added, the atmosphere was replaced with nitrogen which was passed through a dried silica gel tube, and stirred at 150˚C for 20 minutes to mix the both components.

Next, tin octoate 0.05 parts by weight was added as a polymerization catalyst, the atmosphere was replaced with nitrogen which was passed through a dried silica gel tube, and stirred at 180˚C for 3 hours.

After 3 hours, it was subjected to an evaporation under reduced pressure at 140˚C and a degree of vacuum 133 Pa for 180 minutes and taken out. As results of measuring GPC, acid value, melting point, NMR and residual lactide content, it was a composition of number average molecular weight 16,000, acid value 48 equivalent/t, melting point 140˚C, and confirmed to be a polyether-polylactic acid composition. Residual lactide content was 1.6 wt%.

[Comparative example 4]

Into a 3L round bottom flask, polyethylene propylene oxide (number average molecular weight 6,600) 37 wt% was put, the atmosphere was replaced with nitrogen which was passed through a dried silica gel tube, and heated to 150˚C by a mantle heater to be dissolved. The water content of the polyethylene propylene oxide was 2,000 ppm.

L-lactide of optical purity 97% 63 wt% was weighed. The water content of the L-lactide was 1,000 ppm.

Into the flask in which the polyethylene propylene oxide was put, the lactide was added, the atmosphere was replaced with nitrogen which was passed through a dried silica gel tube, and stirred at 150˚C for 20 minutes to mix the both components.

Next, tin octoate 0.05 parts by weight was added as a polymerization catalyst, the atmosphere was replaced with nitrogen which was passed through a dried silica gel tube, and stirred at 160˚C for 3 hours.

After 3 hours, the composition was sampled and as results of measuring GPC, acid value, melting point, NMR and residual lactide content, it was a composition of number average molecular weight 9,200, acid value 110 equivalent/t, melting point 110˚C, and confirmed to be a polyether-polylactic acid composition. Residual lactide content was 2.40 wt%.

In the following tables, evaluation results of the polyether-polylactic acid composition obtained in Examples 1 to 6 and Comparative examples 1 to 7 and films using the same made according to the [Production method of film] are shown.

[Table 1-1]

Table 1-1

| Polyether polylactic acid composition | | Example 1 | Example 2 | Reference Example 3 | Example 4 | Example 5 | Reference Example 6 | Example 7 |
|---|---|---|---|---|---|---|---|---|
| Residual lactide | Wt% | Detectable Limit or less | 0.1 | 0.3 | 0.05 | 0.13 | 0.28 | Detectable limit or less |
| Acid value | Equivalent/t | 30 | 50 | 10 | 30 | 45 | 50 | 30 |
| Polyether segment | | Polyethylene glycol | Polyethylene glycol | Polyethylene glycol | Polyethylene glycol | Polyethylene glycol | Polyethylene propylene oxide | Polyethylene glycol |
| Polylactic acid segment | Mn | 2500 | 2500 | 2500 | 3250 | 2800 | 1400 | 2500 |
| Polyether polylactic acid composition | Mn | 22,000 | 30,000 | 21,000 | 16,500 | 16,000 | 9,000 | 22,000 |
| Melting point | ˚C | 140 | 135 | 130 | 140 | 140 | 110 | 140 |
| Catalyst activity reducing agent | | Phosphoric acid | Phosphorous acid | Dimethyl phosphate | Phosphoric acid | Phosphoric acid/ phosphorous acid | Diethyl phosphate | Phosphoric acid |
| M/P | | 1/3 | 1/3 | 1/9 | 1/3 | 2/9 | 1/9 | 1/3 |
| Storage stability | Evaluation | oo | o | o | oo | oo | o | oo |
| Acid value before test | Equivalent/t | 30 | 50 | 10 | 30 | 45 | 50 | 30 |
| Acid value after test | Equivalent/t | 37 | 73 | 57 | 32 | 48 | 98 | 37 |
| Increased amount of acid value | Equivalent/t | 7 | 23 | 47 | 2 | 3 | 48 | 7 |
| Melt stability | Overall Evaluation | oo | o | o | oo | o | o | oo |

EP 1 972 649 B1

(continued)

| Polyether polylactic acid composition | | Example 1 | Example 2 | Reference Example 3 | Example 4 | Example 5 | Reference Example 6 | Example 7 |
|---|---|---|---|---|---|---|---|---|
| Increased amount. of residual lactide | Wt% | 0.09 | 0.10 | 0.94 | 0.07 | 0.46 | 0.88 | 0.09 |
| Increased amount of acid value | Equivalent/t | 5 | 10 | 45 | 5 | 8 | 40 | 5 |
| Decrease of number average molecular weight | Mn | 800 | 1100 | 1400 | 500 | 750 | 1200 | 800 |
| Hue | Visual inspection | White color | White color | White color | White color | White color | White color | White color |
| Polylactic acid-based film | | | | | | | | |
| Film durability | Evaluation | - | oo | o | oo | oo | o | oo |
| Elongation before storage | % | - | 170 | 160 | 220 | 210 | 170 | 220 |
| Elongation after Storage | % | - | 135 | 100 | 210 | 195 | 110 | 205 |
| Elongation retention | % | - | 79 | 63 | 95 | 93 | 65 | 93 |
| Odor (sensory evaluation) | Odor intensity | oo | o | oo | oo | oo | o | oo |
| Bleed out test | Weight loss ratio | 0.2 | 0.2 | 0.2 | 0.1 | 0.1 | 1.0 | 0.2 |
| Film haze value | % | 0.52 | 0.53 | 0.52 | 0.48 | 0.44 | 1.69 | 0.52 |

Table 1-2

**Table 1-2**

| Polyether polylactic acid compositions | | Example 8 | Reference Example 9 | Comparative example 1 | Comparative example 2 | Comparative example 3 | Comparative example 4 |
|---|---|---|---|---|---|---|---|
| Residual lactide | Wt% | 0.1 | 0.3 | 0.30 | 2.14 | 1.60 | 2.40 |
| Acid value | Equivalent/t | 50 | 10 | 80 | 48 | 48 | 110 |
| Polyether segment | | Polyethylene glycol | Polyethylene glycol | Polyethylene glycol | Polyethylene glycol | Polyethylene glycol | Polyethylene propylene oxide |
| Polylactic acid segment | Mn | 2500 | 2500 | 3,000 | 3,000 | 3,000 | 1300 |
| Polyether polylactic acid composition | Mn | 30,000 | 21,000 | 16,000 | 16,000 | 16,000 | 9200 |
| Melting point | ˚C | 135 | 130 | 140 | 140 | 140 | 110 |
| Catalyst activity reducing agent | | Phosphorous acid | Dimethyl phosphate | Phosphoric acid | Phosphoric acid | - | - |
| M/P | | 1/3 | 1/9 | 1/5 | 5/11 | - | - |
| Storage stability | Evaluation | o | o | × | × | × | × |
| Acid value before test | Equivalent/t | 50 | 10 | 80 | 48 | 48 | 110 |
| Acid value after test | Equivalent/t | 73 | 57 | 210 | 274 | 210 | 356 |
| Increased amount of acid value | Equivalent/t | 23 | 47 | 130 | 226 | 162 | 246 |
| Melt stability | Overall evaluation | o | o | o | o | × | × |
| Increased amount of residual lactide | Wt% | 0.10 | 0.94 | 0.05 | 0.80 | 1.90 | 1.84 |
| Increased amount of acid value | Equivalent/t | 10 | 45 | 32 | 47 | 55 | 67 |

(continued)

| Polyether polylactic acid compositions | | Example 8 | Reference Example 9 | Comparative example 1 | Comparative example 2 | Comparative example 3 | Comparative example 4 |
|---|---|---|---|---|---|---|---|
| Decrease of number average molecular weight | Mn | 1100 | 1400 | 1500 | 1300 | 2300 | 2.000 |
| Color tone | Visual inspection | White color | White color | White color | Light yellow | Yellowish | Yellowish |
| Polylactic acid-based film | | | | | | | |
| Film durability | Evaluation | oo | o | × | × | × | × |
| Elongation before storage | % | 170 | 160 | 210 | 225 | 200 | 150 |
| Elongation after storage | % | 135 | 100 | 100 | 105 | 90 | 54 |
| Elongation retention | % | 79 | 63 | 48 | 47 | 45 | 36 |
| Odor (sensory evaluation) | Odor intensity | o | o | 1 | 3 | 4 | 4 |
| Bleed out test | Weight loss ratio | 0.2 | 0.2 | 0.1 | 0.2 | 8.5 | 10 |
| Film haze value | % | 0.53 | 0.52 | 0.49 | 0.46 | 0.53 | 1.58 |

EP 1 972 649 B1

Industrial Applicability

In the present invention, by decreasing or deactivating activity of catalyst by a catalyst activity reducing agent added at a production of polyether-polylactic acid composition, decomposition of lactic acid polyester in evaporation and molding processes is prevented, and it is possible to provide a composition capable also of using as a biodegradable additive having a sufficiently high molecular weight, heat resistance, softness, aging characteristics and a good hue useful for multipurpose wrapping material such as sheet and film having excellent moldability, biodegradability and transparency.

**Claims**

1. A polylactic acid-based film comprising a polyether-polylactic acid compound having polyether and polylactic acid segments, of which residual lactide content is 0.3 wt% or less and acid value is 50 equivalent/t or less wherein the polylactic acid-based film contains phosphoric acid or phosphorous acid or a mixture thereof as a catalyst activity reducing agent.

2. A polylactic acid-based film according to Claim 1, wherein said polyether in said polyether-polylactic acid compound is a polyalkylene ether.

3. A polylactic acid-based film according to Claim 1, wherein said polylactic acid segment in said polyether-polylactic acid compound mainly comprises L-lactic acid or D-lactic acid and has a number average molecular weight of 1,500 or more.

4. A polylactic acid-based film according to Claim 1, wherein a residual lactide content is 0.3 wt% or less when said polyether-polylactic acid compound is kept in molten state under nitrogen atmosphere.

5. A polylactic acid-based film according to Claim 1, wherein a decrease of number average molecular weight is 10% or less when said polyether-polylactic acid compound is kept in molten state under an inert gas atmosphere.

6. A polylactic acid-based film according to Claim 1, **characterized in that** said polyether-polylactic acid compound contains a catalyst and said catalyst activity reducing agent and a molar relation between said catalyst and said catalyst activity reducing agent is expressed by the following equation.

$$1/6 < M/P < 1/2$$

(where, M in the equation denotes a molar content of a catalyst metal element present in the polyether-polylactic acid compound, P denotes a molar content of phosphorus atom present in the polyether-polylactic acid compound.)

7. A polyether-polylactic acid composition which is a compound comprising polyether and polylactic acid segments and is **characterized in that** residual lactide content is 0.3 wt% or less and an acid value is 50 equivalent/t or less, wherein said polyether-polylactic acid composition contains phosphoric acid or phosphorous acid or a mixture thereof as a catalyst activity reducing agent.

8. A polyether-polylactic acid composition according to Claim 7, wherein said polyether is a polyalkylene ether.

9. A polyether-polylactic acid composition according to Claim 7, wherein said polylactic acid segment mainly comprises L-lactic acid or D-lactic acid and has a number average molecular weight of 1,500 or more

10. A polyether-polylactic acid composition according to Claim 7, wherein a residual lactide content is 0.3 wt% or less when said polyether-polylactic acid composition is kept in molten state under nitrogen atmosphere.

11. A polyether-polylactic acid composition according to Claim 7, wherein a decrease of number average molecular weight is 10% or less when said polyether-polylactic acid composition is kept in molten state under an inert gas atmosphere.

**12.** A polyether-polylactic acid composition according to Claim 7, **characterized in that** said polyether-polylactic acid composition contains a catalyst and said catalyst activity reducing agent and a molar relation between said catalyst and said catalyst activity reducing agent is expressed by the following equation.

$$1/6 < M/P < 1/2$$

(where, M in the equation denotes a molar content of a catalyst metal element present in the polyether-polylactic acid composition, P denotes a molar content of phosphorus atom present in the polyether-polylactic acid composition.)

**Patentansprüche**

**1.** Folie auf Polymilchsäurebasis, die eine Polyether-Polymilchsäure-Verbindung mit Polyether- und Polymilchsäuresegmenten umfasst, deren restlicher Lactidgehalt 0,3 Gew.-% oder weniger und Säurewert 50 Äquivalente/t oder weniger beträgt, wobei die Folie auf Polymilchsäurebasis Phosphorsäure oder phosphorige Säure oder eine Mischung davon als ein Mittel zur Reduzierung von Katalysatoraktivität enthält.

**2.** Folie auf Polymilchsäurebasis gemäß Anspruch 1, wobei der Polyether in der Polyether-Polymilchsäure-Verbindung ein Polyalkylenether ist.

**3.** Folie auf Polymilchsäurebasis gemäß Anspruch 1, wobei das Polymilchsäuresegment in der Polyether-Polymilchsäure-Verbindung hauptsächlich L-Milchsäure oder D-Milchsäure umfasst und ein zahlengemitteltes Molekulargewicht von 1.500 oder mehr aufweist.

**4.** Folie auf Polymilchsäurebasis gemäß Anspruch 1, wobei der restliche Lactidgehalt 0,3 Gew.-% oder weniger beträgt, wenn die Polyether-Polymilchsäure-Verbindung in geschmolzenem Zustand in Stickstoffatmosphäre gehalten wird.

**5.** Folie auf Polymilchsäurebasis gemäß Anspruch 1, wobei eine Abnahme des zahlengemittelten Molekulargewichts 10% oder weniger beträgt, wenn die Polyether-Polymilchsäure-Verbindung im geschmolzenen Zustand in einer Inertgasatmosphäre gehalten wird.

**6.** Folie auf Polymilchsäurebasis gemäß Anspruch 1, **dadurch gekennzeichnet, dass** die Polyether-Polymilchsäure-Verbindung einen Katalysator und das Mittel zur Reduzierung von Katalysatoraktivität enthält und ein molares Verhältnis zwischen dem Katalysator und dem Mittel zur Reduzierung von Katalysatoraktivität durch die folgende Gleichung ausgedrückt ist.

$$1/6 < M/P < 1/2$$

(wobei M in der Gleichung den molaren Katalystormetallelementgehalt bedeutet, der in der Polyether-Polymilchsäure-Verbindung vorliegt, P einen molaren Phosphoratomgehalt bedeutet, der in der Polyether-Polymilchsäure-Verbindung vorliegt.)

**7.** Polyether-Polymilchsäure-Zusammensetzung, die eine Verbindung ist, die Polyether- und Polymilchsäuresegmente umfasst, und **dadurch gekennzeichnet ist, dass** der restliche Lactidgehalt 0,3 Gew.-% oder weniger und ein Säurewert 50 Äquivalenten/t oder weniger beträgt, wobei die Polyether-Polymilchsäure-Zusammensetzung Phosphorsäure oder phosphorige Säure oder eine Mischung davon als ein Mittel zur Reduzierung von Katalysatoraktivität enthält.

**8.** Polyether-Polymilchsäure-Zusammensetzung gemäß Anspruch 7, wobei der Polyether ein Polyalkylenether ist.

**9.** Polyether-Polymilchsäure-Zusammensetzung gemäß Anspruch 7, wobei das Polymilchsäuresegment hauptsächlich L-Milchsäure oder D-Milchsäure umfasst und ein zahlengemitteltes Molekulargewicht von 1.500 oder mehr aufweist.

**10.** Polyether-Polymilchsäure-Zusammensetzung gemäß Anspruch 7, wobei ein restlicher Lactidgehalt 0,3 Gew.-% oder weniger beträgt, wenn die Polyether-Polymilchsäure-Zusammensetzung in geschmolzenem Zustand in Stickstoffatmosphäre gehalten wird.

**11.** Polyether-Polymilchsäure-Zusammensetzung gemäß Anspruch 7, wobei eine Abnahme des zahlengemittelten Molekulargewichts 10% oder weniger beträgt, wenn die Polyether-Polymilchsäure-Zusammensetzung im geschmolzenen Zustand in einer Erdgasatmosphäre gehalten wird.

**12.** Polyether-Polymilchsäure-Zusammensetzung gemäß Anspruch 7, **dadurch gekennzeichnet, dass** die Polyether-Polymilchsäure-Zusammensetzung einen Katalysator und das Mittel zur Reduzierung von Katalysatoraktivität enthält und ein molares Verhältnis zwischen dem Katalysator und dem Mittel zur Reduzierung von Katalysatoraktivität durch die folgende Gleichung ausgedrückt ist.

$$1/6 < M/P < 1/2$$

(wobei M in der Gleichung den molaren Katalystormetallelementgehalt bedeutet, der in der Polyether-Polymilchsäure-Zusammensetzung vorliegt, P einen molaren Phosphoratomgehalt bedeutet, der in der Polyether-Polymilchsäure-Zusammensetzung vorliegt.)

**Revendications**

**1.** Film à base de poly(acide lactique) comprenant un composé de polyéther-poly(acide lactique) ayant des segments polyéther et poly(acide lactique), dont une teneur résiduelle en lactide est 0,3% en poids ou moins et dont un indice d'acide est 50 équivalents/t ou moins, dans lequel le film à base de poly(acide lactique) contient de l'acide phosphorique ou de l'acide phosphoreux ou un mélange de ceux-ci comme un agent de réduction de l'activité catalytique.

**2.** Film à base de poly(acide lactique) selon la revendication 1, dans lequel ledit polyéther dans ledit composé de polyéther-poly(acide lactique) est un poly(éther d'alkylène).

**3.** Film à base de poly(acide lactique) selon la revendication 1, dans lequel ledit segment poly(acide lactique) dans ledit composé de polyéther-poly(acide lactique) comprend principalement de l'acide L-lactique ou de l'acide D-lactique et a un poids moléculaire moyen en nombre de 1 500 ou plus.

**4.** Film à base de poly(acide lactique) selon la revendication 1, dans lequel une teneur résiduelle en lactide est 0,3% en poids ou moins lorsque ledit composé de polyéther-poly(acide lactique) est maintenu à l'état fondu sous une atmosphère d'azote.

**5.** Film à base de poly(acide lactique) selon la revendication 1, dans lequel une diminution du poids moléculaire moyen en nombre est 10% ou moins lorsque ledit composé de polyéther-poly(acide lactique) est maintenu à l'état fondu sous une atmosphère de gaz inerte.

**6.** Film à base de poly(acide lactique) selon la revendication 1, **caractérisé en ce que** ledit composé de polyéther-poly(acide lactique) contient un catalyseur et ledit agent de réduction de l'activité catalytique et une relation molaire entre ledit catalyseur et ledit agent de réduction de l'activité catalytique est exprimée par l'équation suivante :

$$1/6 < M/P < 1/2$$

(où M dans l'équation dénote un contenu molaire d'un élément métal catalyseur présent dans le composé de polyéther-poly(acide lactique), P dénote un contenu molaire d'atome de phosphore présent dans le composé de polyéther-poly(acide lactique)).

**7.** Composition de polyéther-poly(acide lactique) qui est un composé comprenant des segments polyéther et poly(acide lactique) et est **caractérisée en ce qu'**une teneur résiduelle en lactide est 0,3% en poids ou moins et un indice d'acide est 50 équivalents/t ou moins, dans laquelle ladite composition de polyéther-poly(acide lactique) contient de l'acide phosphorique ou de l'acide phosphoreux ou un mélange de ceux-ci comme un agent de réduction de l'activité catalytique.

**8.** Composition de polyéther-poly(acide lactique) selon la revendication 7, dans laquelle ledit polyéther est un poly(éther d'alkylène).

**9.** Composition de polyéther-poly(acide lactique) selon la revendication 7, dans laquelle ledit segment poly(acide lactique) comprend principalement de l'acide L-lactique ou de l'acide D-lactique et a un poids moléculaire moyen en nombre de 1 500 ou plus.

**10.** Composition de polyéther-poly(acide lactique) selon la revendication 7, dans laquelle une teneur résiduelle en lactide est 0,3% en poids ou moins lorsque ladite composition de polyéther-poly(acide lactique) est maintenue à l'état fondu sous une atmosphère d'azote.

**11.** Composition de polyéther-poly(acide lactique) selon la revendication 7, dans laquelle une diminution du poids moléculaire moyen en nombre est 10% ou moins lorsque ladite composition de polyéther-poly(acide lactique) est maintenue à l'état fondu sous une atmosphère de gaz inerte.

**12.** Composition de polyéther-poly(acide lactique) selon la revendication 7, **caractérisée en ce que** ladite composition de polyéther-poly(acide lactique) contient un catalyseur et ledit agent de réduction de l'activité catalytique et une relation molaire entre ledit catalyseur et ledit agent de réduction de l'activité catalytique est exprimée par l'équation suivante :

$$1/6 < M/P < 1/2$$

(où M dans l'équation dénote un contenu molaire d'un élément métal catalyseur présent dans la composition de polyéther-poly(acide lactique), P dénote un contenu molaire d'atome de phosphore présent dans la composition de polyéther-poly(acide lactique)).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 532154 A
- JP H0593050 A
- JP H06116381 A
- JP 3513972 B
- JP 3487388 B
- JP 2005146274 A